# EUROPÄISCHE PATENTSCHRIFT

(11) **EP 2 624 990 B1**
(45) Veröffentlichungstag und Bekanntmachung des Hinweises auf die Patenterteilung: **16.09.2015**
(21) Anmeldenummer: 11764548.1
(22) Anmeldetag: 04.10.2011
(51) Int. Cl.: B23D 51/16, B23D 57/00, B26D 1/10, B26D 1/547, B26D 5/14, B26D 3/00, B26D 5/00, B26D 5/08

(54) **VERFAHREN ZUM SCHNEIDEN VON BLOCKMATERIALIEN SOWIE SCHNEIDEMASCHINE ZUM SCHNEIDEN VON BLOCKMATERIALIEN**
METHOD FOR CUTTING BLOCK MATERIALS AND CUTTING MACHINE FOR CUTTING BLOCK MATERIALS
PROCÉDÉ POUR COUPER DES MATÉRIAUX EN BLOC AINSI QUE MACHINE DE COUPE POUR COUPER DES MATÉRIAUX EN BLOC

(30) Priorität: 08.10.2010 DE 102010047749
(43) Veröffentlichungstag der Anmeldung: 14.08.2013
(73) Patentinhaber: Fecken-Kirfel GmbH & Co. KG, 52070 Aachen (DE)
(72) Erfinder: TILLMANN, Michael, 52146 Würselen (DE); TÖNNES, Helmut, 52355 Düren (DE); WEINGÄRTNER, Ludger, 52062 Aachen (DE)
(74) Vertreter: Von Kreisler Selting Werner - Partnerschaft von Patentanwälten und Rechtsanwälten mbB
(86) Internationale Anmeldenummer: PCT/EP2011/067320
(87) Internationale Veröffentlichungsnummer: WO 2012/045745

(56) Entgegenhaltungen:
- DE-A1- 4 309 327
- DE-B4- 4 393 341

## Beschreibung

Die vorliegende Erfindung betrifft ein Verfahren zum Schneiden von Blockmaterialien gemäß dem Oberbegriff des Anspruchs 1, eine Schneidemaschine zum Schneiden von Blockmaterialien gemäß dem Oberbegriff des Anspruchs 9 und ein Verfahren zum Betrieb einer derartigen Schneidemaschine. Eine solche Schneidmaschine und solche Verfahren sind der DE 43 93 341 B1 zu entnehmen.

Schneidemaschinen für Blockmaterialien wie beispielsweise geschäumte Materialien werden dazu verwendet, um Formstücke aus den Materialblöcken zu schneiden. Dies hat den Vorteil, dass das Material zunächst auf einfache Art und Weise in großen Blöcken bereitgestellt werden kann und je nach Bedarf die entsprechenden Formteile aus diesen Blöcken geschnitten werden können.

Bei sogenannten Konturschneidemaschinen werden u. a. oszillierende Messer eingesetzt, die beispielsweise mit einer Frequenz zwischen 20 und 50 Hertz oszillieren, wobei die Messer während der Oszillation einen Hub zwischen 25 und 60 mm ausführen.

Die verwendeten Messer können unterschiedlich ausgebildet sein wie beispielsweise als glattes oder gezahntes Messer oder auch als Schneidedraht oder Säge. Um ein gutes und über die gesamte Maschinenbreite gleichbleibendes Schneideergebnis zu erzielen ist es von Vorteil, dass das Messer unter Zugspannung gesetzt wird. Je nach Messerart kann die Zugspannung zwischen 300 und 700 N/mm² betragen.

Bei der oszillierenden Bewegung des Messerelementes besteht jedoch häufig die Schwierigkeit, dass jede Richtungsänderung des Messerelementes während der Oszillationsbewegung auch zu einer Veränderung der Messerspannung führen kann, sodass das Messer entspannt und wieder gespannt wird. Da jedoch ein zufriedenstellendes Scheideergebnis nur mit einer möglichst gleichbleibenden Messerspannung erreicht wird, wurde vielfach versucht, Schneidemaschinen bereitzustellen, die bei einer oszillierenden Bewegung des Messerelementes eine möglichst gleichbleibende Spannung des Messerelementes aufrecht erhalten können.

Aus der DE 38 12 587 ist beispielsweise bekannt, das Messerelement mit einem Umlenkdraht zu verbinden, der zusammen mit dem Messerelement einen geschlossenen Ring bildet. Der Umlenkdraht wird über Umlenkrollen geführt und über einen Antriebsmechanismus angetrieben. Eine derartige Schneidemaschine ermöglicht ein relativ gutes Schnittergebnis, da die Messerspannung während der Oszillationsbewegung relativ konstant bleibt. Jedoch ist der Umlenkdraht sehr verschleißanfällig, sodass bei nahezu jedem Messerwechsel auch dieser ausgetauscht werden muss, was zu erheblichen Kosten führt. Auch die Umlenkscheiben sind aufgrund der Oszillationsbewegung, mit der sie bewegt werden, stark verschleißbehaftet. Die Umlenkscheiben übertragen darüber hinaus die Oszillationsbewegung als Vibration auf die Maschinenkörper, sodass die Genauigkeit des Schnittergebnisses begrenzt ist. Darüber hinaus erfordert die Lösung mit dem Umlenkdraht einen vorrichtungstechnisch großen Aufwand, da der Umlenkdraht mit ausreichendem Abstand zu dem Messerelement umgeführt werden muss, damit auch große Blockmaterialien geschnitten werden können. Dadurch ist ein sehr großer Maschinenrahmen notwendig, was aufgrund des vorrichtungstechnischen Aufwandes zu ebenfalls hohen Kosten führt.

Aus der DE 4 309 327 C2 ist ein alternativer Antrieb für eine Schneidemaschine bekannt. Bei diesem werden über einen gemeinsamen Motor zwei Antriebsmechanismen für die Messerenden angetrieben. Die Antriebsmechanismen werden drehzahlsynchron in eine Rotationsbewegung versetzt, wobei jeweils über eine Exzenterscheibe mit Schubstange die translatorische Bewegung des Messerelementes erzeugt wird. Aufgrund der Umwandlung der rotatorischen Bewegung in die translatorische Bewegung bleiben jedoch die Anlenkpunkte zwischen den Antriebsmechanismen und dem Messer während einer Umdrehung der Antriebsmechanismen nicht in gleichem Abstand, sodass sich während des Betriebs die Spannung des Messerelementes ändert. Aufgrund des gemeinsamen Antriebs über einen Motor ist darüber hinaus ein großer, vorrichtungstechnischer Aufwand notwendig, der darüber hinaus einen großen Platzbedarf hat. Dadurch ist ähnlich der aus DE 3 812 587 bekannten Lösung ein großer Platzbedarf mit daraus resultierenden hohen Herstellungskosten notwendig.

Die DE 4 393 341 B4 schlägt daher vor, zwei Antriebseinheiten an den Enden eines Schneideelementes anzuordnen, wobei jede Antriebseinheit eine Spannvorrichtung aufweist, über die während des Betriebs kontinuierlich eine Kraft auf das Schneideelement ausgeübt wird, um dieses während der Oszillationsbewegung in Spannung zu halten. Eine derartige Lösung ist jedoch unbefriedigend, da die Spannungsvorrichtungen zu träge sind, um die hochdynamischen Spannungsunterschiede auszugleichen und es eines vorrichtungstechnisch sehr großen Aufwandes bedarf, um derartige Spannungsvorrichtungen bereitzustellen.

Es ist daher die Aufgabe der vorliegenden Erfindung, die Schneidemaschine der eingangs genannten Art dahingehend weiterzubilden, dass mit vorrichtungstechnisch geringem Aufwand eine oszillierende Schneidebewegung erzeugbar ist, wobei das Messerelement eine möglichst gleichbleibende Spannung besitzt. Ferner ist es die Aufgabe der vorliegenden Erfindung, ein verbessertes Verfahren zum Schneiden von Blockmaterialien bereitzustellen.

Zur Lösung der Aufgabe dienen die Merkmale des Anspruchs 1, 9 und 15.

Bei einem erfindungsgemäßen Verfahren zum Schneiden von Blockmaterialien, insbesondere geschäumten oder expandierten Materialien, ist es vorgesehen, ein Messerelement mit einem ersten und einem zweiten Ende zum Ausführen einer Hin- und Herbewegung in Längsrichtung translatorisch anzutreiben, wobei das erste und das zweite Ende des Messerelementes angetrieben werden. Der Antrieb des ersten Endes des Messerelementes erfolgt über die Umwandlung einer ersten Rotationsbewegung in eine erste Translationsbewegung und der Antrieb des zweiten Endes des Messerelementes über die Umwandlung einer zweiten Rotationsbewegung in eine zweite, der ersten Translationsbewegung gleichläufige Translationsbewegung. Die Drehzahl der ersten Rotationsbewegung ist auf ganze Umdrehungen bezogen gleich der Drehzahl der zweiten Rotationsbewegung. Bei einer Umdrehung der ersten und der zweiten Rotationsbewegung weist die erste Rotationsbewegung in einem ersten und zweiten Teilbereich der Umdrehung eine größere Winkelgeschwindigkeit auf als die zweite Rotationsbewegung und in einem dritten und vierten Teilbereich der Umdrehung weist die zweite Rotationsbewegung eine größere Winkelgeschwindigkeit auf als die erste Rotationsbewegung. Zu Beginn bzw. am Ende einer Umdrehung und am Übergang zwischen dem zweiten und dritten Teilbereich der Umdrehung weisen die erste und die zweite Rotationsbewegung eine gleiche Winkelgeschwindigkeit auf.

Mit anderen Worten benötigen beide Rotationsbewegungen für eine Umdrehung exakt die gleiche Zeit. Jedoch werden die Rotationsbewegungen während einer Umdrehung unterschiedlich beschleunigt und abgebremst, .sodass während einer Umdrehung beide Rotationsbewegungen unterschiedliche Winkelgeschwindigkeitsverläufe besitzen. Die Rotationsbewegungen besitzen somit identische Drehzahlen, laufen jedoch während einer Umdrehung nicht synchron.

Es hat sich herausgestellt, dass durch eine derartige Steuerung der Rotationsbewegungen, die aufgrund der Umwandlung der Rotationsbewegung in eine Translationsbewegung entstehen, Längenabweichungen zwischen den Anlenkpunkten des Messerelementes kompensiert werden können, sodass bei einer oszillierenden Translationsbewegung des Messerelementes eine im Wesentlichen gleichbleibende Messerspannung aufrecht erhalten werden kann.

Es kann vorgesehen sein, dass die erste Rotationsbewegung im ersten und vierten Teilbereich der Umdrehung beschleunigt und im zweiten und dritten Teilbereich abgebremst wird.

Auch kann vorgesehen sein, dass die zweite Rotationsbewegung im ersten und vierten Teilbereich der Umdrehung abgebremst und im zweiten und dritten Teilbereich beschleunigt wird. Durch derartige Beschleunigungs- und Abbremsvorgänge während einer Umdrehung kann das gewünschte Geschwindigkeitsprofil erreicht werden.

Die Winkelgeschwindigkeitsprofile der Rotationsbewegungen sind derart ausgebildet, dass nach der Hälfte der durchschnittlichen Dauer einer Umdrehung die beiden Rotationsgeschwindigkeiten die gleiche Winkelgeschwindigkeit besitzen. Mit anderen Worten erfolgt der Übergang zwischen dem zweiten und dritten Teilbereich der Umdrehung nach der Hälfte der Zeit, die im Durchschnitt für eine Umdrehung benötigt wird. Bei einem Übergang von einer Umdrehung zu der nächsten erreichen die beiden Rotationsbewegungen wieder die gleiche Geschwindigkeit, sodass zu Beginn bzw. am Ende einer Umdrehung die gleiche Winkelgeschwindigkeit bei beiden Rotationsbewegungen vorliegt.

Bei dem erfindungsgemäßen Geschwindigkeitsprofil kann beispielsweise vorgesehen sein, dass bei gedachten, äquivalenten Punkten, die die beiden Rotationsbewegungen ausführen, der Punkt der ersten Rotationsbewegung zunächst dem Punkt der zweiten Rotationsbewegung nachläuft.

Durch die Beschleunigung der ersten Rotationsbewegung im ersten Teilbereich und dem Abbremsen der zweiten Rotationsbewegung im ersten Teilbereich holt der Punkt der ersten Rotationsbewegung gegenüber dem Punkt der zweiten Rotationsbewegung auf, sodass nach etwa ¼ der Zeit, die im Durchschnitt für eine Umdrehung benötigt wird, beide Punkte die 90° Markierung erreichen. Dabei hat die erste Rotationsbewegung einen Winkeibereich größer 90° zurückgelegt, während die zweite Rotationsbewegung einen Winkelbereich geringer 90° zurückgelegt hat. Der gedachte Punkt der ersten Rotationsbewegung überholt somit nun den Punkt der zweiten Rotationsbewegung, wobei es in dem zweiten Bereich der Umdrehung zu einem Abbremsen der ersten Rotationsbewegung und zu einer Beschleunigung der zweiten Rotationsbewegung kommt. Bei der Hälfte der Umdrehungszeit und somit dem Übergang zwischen dem zweiten und dem dritten Bereich der Umdrehung läuft die erste Rotationsbewegung mit einem Abstand der zweiten Rotationsbewegung voraus, der dem Abstand der Punkte, der zu Beginn der Umdrehung vorlag, gleicht, jedoch in umgekehrter Reihenfolge. Zu diesem Zeitpunkt haben beide Rotationsgeschwindigkeiten wieder die gleiche Winkelgeschwindigkeit erreicht. Die zweite Rotationsbewegung wird im dritten Bereich der Umdrehung beschleunigt, während die erste Rotationsbewegung abgebremst wird, sodass sich nach ¾ der durchschnittlichen Umdrehungszeit beide gedachten Punkte bei etwa 270° gleichauf befinden. Durch die höhere Winkelgeschwindigkeit überholt der gedachte Punkt der zweiten Rotationsbewegung den gedachten Punkt der ersten Rotationsbewegung, wobei nur die zweite Rotationsbewegung im vierten Bereich der Umdrehung abgebremst wird, wohingegen die erste Rotationsbewegung wiederrum beschleunigt wird, bis am Ende der Umdrehung beide Rotationsbewegungen wiederum die gleiche Geschwindigkeit und die Punkte den Abstand, der zu Beginn der Umdrehung vorlag, aufweisen.

Bei einem erfindungsgemäßen Verfahren kann vorteilhaft vorgesehen sein, dass die erste und zweite Rotationsbewegung durch einen ersten und einen zweiten Servomotor erzeugt wird. Da die Messerelemente bei den Schneidvorgängen mit sehr hohen Frequenzen oszillieren, beispielsweise 20 bis 60 Hertz, sind die Beschleunigungs- und Abbremsvorgänge der Rotationsbewegungen hoch dynamisch. Es hat sich herausgestellt, dass derartige hochdynamische Vorgänge besonders gut durch moderne Servomotoren erzeugt werden können.

Dabei kann vorgesehen sein, dass die erste und zweite Rotationsbewegung jeweils über eine Exzenterscheibe mit Schubstange in die erste und zweite Translationsbewegung umgewandelt wird. Über derartige Vorrichtungen ist eine Umwandlung von einer Rotationsbewegung mit einer Translationsbewegung auf konstruktiv einfache Art und Weise umsetzbar.

Bei einem bevorzugten erfindungsgemäßen Verfahren ist vorgesehen, dass eine Steuerung der ersten und zweiten Rotationsbewegung über eine Master-Slave-Steuerung erfolgt, wobei eine Ist-Winkelgeschwindigkeit der ersten Rotationsbewegung als Soll-Winkelgeschwindigkeit der zweiten Rotationsbewegung oder eine Ist-Winkelgeschwindigkeit der zweiten Rotationsbewegung als Soll-Winkelgeschwindigkeit der ersten Rotationsbewegung vorgegeben wird. Eine derartige Steuerung hat sich als besonders vorteilhaft erwiesen, um die erfindungsgemäßen Geschwindigkeitsprofile der Rotationsbewegungen zu erzeugen. Die erfindungsgemäßen Geschwindigkeitsprofile werden erreicht, in dem diese der Master-Slave-Steuerung als weitere Steuerbefehle überlagert werden.

Die Winkelgeschwindigkeiten der ersten und/oder der zweiten Rotationsbewegung können sich während einer Umdrehung periodisch verändern.

In einem bevorzugten erfindungsgemäßen Verfahren ist vorgesehen, dass das Messerelement um eine Achse in Längsrichtung des Messerelementes drehbar ist. Auf diese Weise können verschiedene Ebenenschnitte mit dem erfindungsgemäßen Verfahren durchgeführt werden.

In einem bevorzugten Ausführungsbeispiel des erfindungsgemäßen Verfahrens ist vorgesehen, dass während einer Umdrehung auftretende Drehwinkeldifferenzen zwischen der ersten und der zweiten Rotationsbewegung maximal 10° betragen.

Die Erfindung sieht ferner eine Schneidemaschine zum Schneiden von Blockmaterialien, insbesondere geschäumten oder expandierten Materialien vor. Die Schneidemaschine weist einen Maschinenrahmen und ein Messerelement mit einem ersten und einem zweiten Ende auf. Eine Führungsvorrichtung führt das Messerelement in eine Längsrichtung des Messerelementes, sodass dieses nur eine Translationsbewegung in Längsrichtung des Messerelementes ausführen kann. Die Schneidemaschine weist eine erste und eine zweite Antriebseinheit auf, wobei die erste Antriebseinheit mit dem ersten Ende des Messerelementes und die zweite Antriebseinheit mit dem zweiten Ende des Messerelementes gekoppelt ist. Die erste oder die zweite Antriebseinheit ist auf einer Spannvorrichtung angeordnet, über die eine Spannung des Messerelementes einstellbar ist. Die erste und die zweite Antriebseinheit weisen jeweils einen Servomotor und eine an dem Servomotor gekoppelte Exzenterscheibe mit Schubstange auf, wobei jeweils eine der Schubstangen mit dem ersten und dem zweiten Ende des Messerelementes verbunden ist. Eine gemeinsame Steuerungsvorrichtung steuert die Servomotoren der ersten und zweiten Antriebseinheit. Die Steuerungsvorrichtung treibt die Servomotorendrehzahl, bezogen auf eine ganze Umdrehung, synchron an und bremst und beschleunigt während einer Umdrehung der Servomotoren mindestens einen der Servomotoren.

Dadurch weist der Servomotor der ersten Antriebseinheit in einem ersten und zweiten Teilbereich der Umdrehung eine größere Winkelgeschwindigkeit auf als der Servomotor der zweiten Antriebseinheit und in einem dritten und vierten Teilbereich der Umdrehung weist der Servomotor der zweiten Antriebseinheit eine größere Winkelgeschwindigkeit auf als der Servomotor der ersten Antriebseinheit.

Eine derartige Schneidemaschine kann aufgrund der beiden lediglich gemeinsam gesteuerten Antriebseinheiten sehr kompakt ausgeführt werden, wobei mit Hilfe der beiden Antriebseinheiten dennoch gewährleistet werden kann, dass während der oszillierenden Bewegung des Messerelementes dieses die gewünschte gleichbleibende Spannung aufweist. Dadurch kann ein sehr gutes Schnittergebnis erzielt werden. Der Maschinenrahmen, an dem das Messerelement angeordnet ist, kann sehr kompakt gehalten werden, sodass bei den für den Schnitt notwendigen Bewegungen des Maschinenrahmens im Vergleich zu den aufwändigen Konstruktionen des Standes der Technik, eine wesentlich geringere Masse bewegt werden muss, sodass auch dies zu einem verbesserten Schnittergebnis führt. Da jede Antriebseinheit jeweils nur aus einem Servomotor, einer Exzenterscheibe und einer Schubstange besteht, ist die erfindungsgemäße Schneidemaschine konstruktiv einfach ausgeführt und somit kostengünstig herstellbar. Darüber hinaus ist die erfindungsgemäße Schneidemaschine aufgrund der wenigen bewegten Teile und des einfachen Aufbaus sehr wartungs-und verschleißarm.

In einem bevorzugten Ausführungsbeispiel der erfindungsgemäßen Schneidemaschine kann vorgesehen sein, dass die Steuerungsvorrichtung eine Master-Slave-Steuerung ist, wobei die Steuerungsvorrichtung eine Ist-Winkelgeschwindigkeit des ersten Servomotors ermittelt und dem zweiten Servomotor als Soll-Winkelgeschwindigkeit vorgibt oder eine Ist-Winkelgeschwindigkeit des zweiten Servomotors ermittelt und dem ersten Servomotor als Soll-Winkelgeschwindigkeit vorgibt.

Auf diese Art und Weise ist eine Steuerung der Servomotoren der erfindungsgemäßen Schneidemaschine zum Erreichen des gewünschten Geschwindigkeitsprofils auf besonders einfache Art und Weise möglich, wobei erreicht wird, dass bezogen auf ganze Umdrehungen ein drehzahlsynchroner Betrieb der Servomotoren auf einfache Art und Weise möglich ist.

Bei der erfindungsgemäßen Schneidemaschine muss die gewünschte Messerspannung lediglich zu Beginn des Betriebs über eine Spannvorrichtung eingestellt werden. Durch die Geschwindigkeitsprofile der Servomotoren wird mit der erfindungsgemäßen Schneidemaschine gewährleistet, dass keine oder nur äußerst geringe Änderungen der Spannung des Messerelementes während der Oszillationsbewegung auftreten, sodass die Spannvorrichtung diese nicht ausgleichen muss. Lediglich eventuell während des Betriebs auftretende Längenänderungen des Messerelementes durch beispielsweise Erwärmungseffekte müssen während des Betriebs durch die Spannvorrichtung ausgeglichen werden.

Es kann vorgesehen sein, dass die Spannvorrichtung aus einer in Längsrichtung des Messerelementes verfahrbaren Platte besteht, auf der die erste oder die zweite Antriebsvorrichtung angeordnet ist. Durch das Vorsehen einer verfahrbaren Platte ist ein Spannen des Messerelementes auf konstruktiv einfache Art und Weise möglich, da mit der Spannvorrichtung eine komplette Antriebsvorrichtung verschoben wird.

Es kann vorgesehen sein, dass über die Führungsvorrichtung das Messerelement um eine Achse in Längsrichtung des Messerelementes verdrehbar ist. Dadurch können mit der erfindungsgemäßen Schneidemaschine Schnitte in verschiedenen Ebenen ausgeführt werden.

Das Messerelement der erfindungsgemäßen Schneidemaschine kann vertikal oder horizontal angeordnet sein.

Bei einem bevorzugten Ausführungsbeispiel der Erfindung ist vorgesehen, dass die Servomotoren vertikal und die Exzenterscheiben in einer horizontalen Ebene angeordnet sind.

Durch das Vorsehen der Exzenterscheiben in einer horizontalen Ebene muss die an der Exzenterscheibe angebrachte Schubstange nicht entgegen der Schwerkraft bewegt werden, sodass Einflüsse auf die Drehbewegung der Exzenterscheibe aufgrund von äußeren Einflüssen der Schwerkraft vermieden werden. Durch das Anordnen des Servomotors in vertikaler Richtung kann die Exzenterscheibe in vorteilhafter Weise mit dem Antrieb des Servomotors verbunden werden.

In einem Ausführungsbeispiel der Erfindung ist vorgesehen, dass die Schubstangen eine Länge zwischen 150 mm und 300 mm aufweisen. Es hat sich herausgestellt, dass durch die geschickte Wahl der Länge der Schubstange die für die Erfindung notwendige maximale Winkeldifferenz zwischen den beiden Rotationsbewegungen verringert werden kann, wodurch die Belastung der Servomotoren ebenfalls verringert wird. Durch längere Schubstangen könnte die notwendige Winkeldifferenz weiter verringert werden, wobei jedoch die längeren Schubstangen die Baugröße einer erfindungsgemäßen Schneidemaschine ebenfalls vergrößern würden. Daher ist es von Vorteil, einen Kompromiss zwischen den beiden Werten zu finden.

Die Erfindung sieht ferner ein Verfahren zum Betrieb einer erfindungsgemäßen Schneidemaschine vor. Dabei werden die Servomotoren der ersten und der zweiten Antriebseinheit der Schneidemaschine auf ganze Umdrehungen bezogen mit der gleichen Drehzahl angetrieben. Zum Beginn und am Ende einer Umdrehung der Servomotoren der ersten und zweiten Antriebseinheit weisen die Servomotoren die gleiche Geschwindigkeit auf. Im ersten und vierten Teilbereich der Umdrehung wird der Servomotor der ersten Antriebseinheit beschleunigt und/oder der Servomotor der zweiten Antriebseinheit abgebremst.

Im zweiten und im dritten Teilbereich der Umdrehung wird der Servomotor der ersten Antriebseinheit abgebremst und/oder, der Servomotor der zweiten Antriebseinheit beschleunigt.

Beim Übergang zwischen dem zweiten und dritten Teilbereich der Umdrehung besitzen die Servomotoren wieder die gleiche Geschwindigkeit.

Bei dem erfindungsgemäßen Verfahren zum Betrieb einer Schneidemaschine kann somit vorgesehen sein, dass der Servomotor beispielsweise der ersten Antriebseinheit nicht beschleunigt oder abgebremst wird wohingegen zum Erzeugen der gewünschten Geschwindigkeitsdifferenz während einer Umdrehung der Servomotor der zweiten Antriebseinheit abgebremst bzw. beschleunigt wird. Auch ist es möglich, dass umgekehrt der Servomotor der zweiten Antriebseinheit eine konstante Geschwindigkeit beibehält und die Geschwindigkeitsänderungen an dem Servomotor der ersten Antriebseinheit durchgeführt werden. Um zu vermeiden, dass einer der Servomotoren gegenüber dem anderen aufgrund der hochdynamischen Prozesse übermäßig belastet wird und somit schneller verschleißt, hat sich herausgestellt, dass es von Vorteil ist, die Servomotoren der ersten und zweiten Antriebseinheit möglichst gleichmäßig zu belasten, sodass bevorzugt die erfindungsgemäße Schneidemaschine betrieben wird, indem während des Beschleunigens des Servomotors der ersten Antriebseinheit der Servomotor der zweiten Antriebseinheit abgebremst wird und umgekehrt während der Beschleunigung des Servomotors der zweiten Antriebseinheit der Servomotor der ersten Antriebseinheit abgebremst wird.

Die gewünschte Ausgleichsbewegung wird somit auf beide Servomotoren im gleichen Maße verteilt.

Das erfindungsgemäße Verfahren zum Betrieb einer erfindungsgemäßen Schneidemaschine kann somit die aufgrund der Umwandlung von Rotationsbewegungen in Translationsbewegungen des Messerelementes auftretenden Unterschiede im Abstand zwischen den Anlenkpunkten des Messerelementes vollständig kompensieren, sodass eine gleichbleibende Spannung des Messerelementes erreicht werden kann.

Als Messerelemente im Rahmen der Erfindung können glatte oder gezahnte Messer oder auch Schneidedrähte dienen. Die mit dem erfindungsgemäßen Verfahren oder mit der erfindungsgemäßen Schneidemaschine schneidbaren Blöcke können aus Schaumstoffen oder expandierten Materialien bestehen. Die Blöcke können beispielsweise aus PU-, PE-, PP-, PS-, oder PVC-Materialien bestehen.

Im Folgenden wird unter Bezugnahme auf die nachfolgenden Figuren die Erfindung näher erläutert. Es zeigen:
- Fig. 1: Eine schematische Seitenansicht einer erfindungsgemäßen Schneidemaschine,
- Fig. 2: den Winkelverlauf der ersten und zweiten Rotationsbewegung während einer Umdrehung und
- Fig. 3: ein Diagramm, indem die durch die Geschwindigkeitsunterschiede auftretenden Winkelabweichungen der beiden Rotationsbewegungen dargestellt sind.

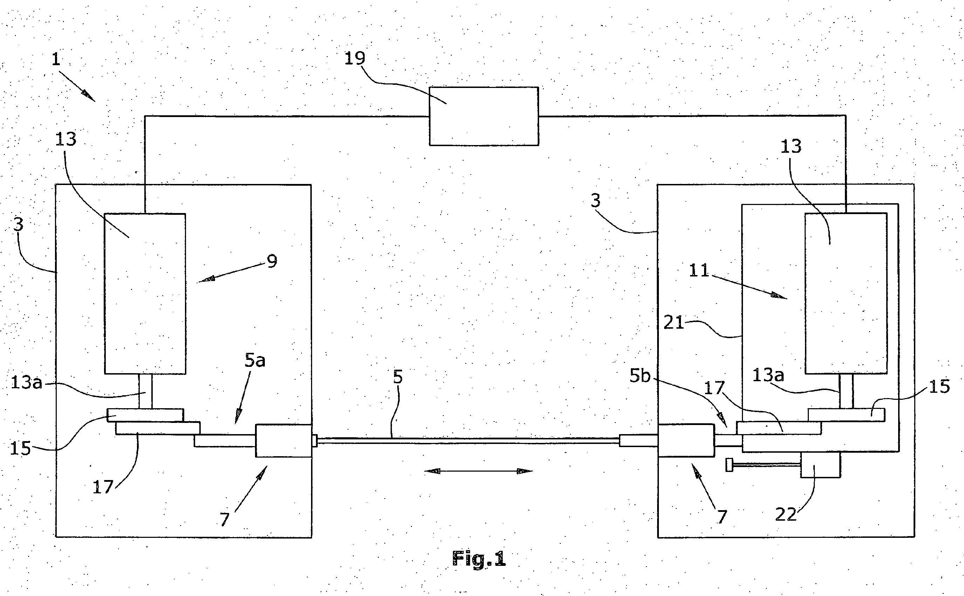

In Fig. 1 ist eine erfindungsgemäße Schneidemaschine 1 zum Schneiden von Blockmaterialien, insbesondere geschäumten oder expandierten Materialien schematisch in der Seitenansicht dargestellt.

Die Schneidemaschine 1 weist einen Maschinenrahmen 3 auf, an dem ein Messerelement 5 mit einem ersten Ende 5a und am zweiten Ende 5b angeordnet ist. Das Messerelement 5 ist in einer Führungsvorrichtung 7, die aus zwei Teilen besteht, gelagert, sodass das Messerelement 5 in einer Längsrichtung des Messerelementes 5 geführt ist.

Die nicht dargestellten Blockmaterialien werden der Schneidemaschine 1 über herkömmliche Fördereinrichtungen zugeführt. Alternativ wird die Schneidemaschine 1 zum Schneiden bezüglich der Blockmaterialien verfahren.

Somit kann das Messerelement 5 lediglich eine translatorische Bewegung in Längsrichtung des Messerelementes 5 durchführen. Die Längsrichtung des Messerelementes 5 ist in Fig. 1 durch einen Doppelpfeil gekennzeichnet.

Das erste und das zweite Ende 5a, 5b des Messerelementes 5 durchdringen die beiden Teile der Führungsvorrichtung 7. Das erste und das zweite Ende 5a, 5b des Messerelementes 5 können dabei als Vierkant ohne Schneide ausgebildet sein. Eine erste Antriebseinheit 9 ist mit dem ersten Ende 5a des Messerelementes 5 gekoppelt und eine zweite Antriebseinheit 11 ist mit dem zweiten Ende 5b des Messerelementes 5 gekoppelt.

Die erste und die zweite Antriebseinheit 9, 11 weisen jeweils einen Servomotor 13 auf. Jeder Servomotor 13 hat einen Abtrieb 13a, mit dem eine Exzenterscheibe 15 gekoppelt ist. An der Exzenterscheibe ist exzentrisch eine Schubstange 17 angebracht, die zur Verbindung mit dem ersten und zweiten Ende 5a, 5b des Messerelementes dient. Die erste Antriebseinheit 9 und die zweite Antriebseinheit 11 sind somit über die Schubstangen mit dem ersten Ende 5a und dem zweiten Ende 5b des Messerelementes 5 verbunden.

Über die Exzenterscheiben 15 und die Schubstangen 17 sowie die Führungsvorrichtung 7 wird die rotatorische Bewegung des Servomotoren 13 in eine translatorische Bewegung des Messerelementes 5 umgewandelt.

Die Umwandlung der Rotationsbewegung in eine Translationsbewegung führt bei exakt gleichen Geschwindigkeitsprofilen der Exzenterscheiben dazu, dass die Kopplungspunkte zwischen den Schubstangen 17 und dem ersten Ende 5a und dem zweiten Ende 5b des Messerelementes 5 bei einer Umdrehung der Exzenterscheiben 15 unterschiedliche Abstände aufweisen, sodass die Spannung im Messerelement 5 variieren würde. Um einen sauberen Schnitt mit der erfindungsgemäßen Schneidemaschine 1 zu verwirklichen, ist es jedoch notwendig, dass die Messerspannung, nahezu konstant ist.

Daher werden die Servomotoren 13 mit einer gemeinsamen Steuerungsvorrichtung 19 gesteuert. Die Steuerungsvorrichtung 19 steuert die Servomotoren 13, bezogen auf ganz Umdrehungen, drehzahlsynchron. Während einer Umdrehung werden die Servomotoren 13 jedoch abwechselnd abgebremst und wieder beschleunigt, sodass der Servomotor 13 der ersten Antriebseinheit 9 in einem ersten und einem zweiten Teilbereich der Umdrehung eine größere Winkelgeschwindigkeit aufweist als der Servomotor 13 der zweiten Antriebseinheit 11 und in einem dritten und einem vierten Teilbereich der Umdrehung der Servomotor 13 der zweiten Antriebseinheit 11 eine größere Winkelgeschwindigkeit aufweist als der Servomotor 13 der ersten Antriebseinheit 9.

Die gemeinsame Steuerungsvorrichtung 19 kann dabei aus einer CNC-Steuerung und zwei Reglern für die Servomotoren 13 bestehen. Die CNC-Steuerung gibt daher den Reglern die Drehzahl vor. In den Reglern ist das entsprechende Geschwindigkeitsprofil als Vorgabe hinterlegt.

Auf diese Weise können die aufgrund der Umwandlung der rotatorischen Bewegung in eine translatorische Bewegung entstehenden Abstandsunterschiede kompensiert werden, indem während einer Umdrehung die Servomotoren 13 den Antriebseinheiten 9, 11 gegenüber dem anderen vor- bzw. nacheilen.

Um die Spannung des Messerelementes 5 vor Beginn eines Schnittes einzustellen, ist die zweite Antriebseinheit 11 auf einer Spannvorrichtung 21 in Form einer verschiebbaren Platte angeordnet. Über einen entsprechenden Kraftgeber 22, wie beispielsweise ein Druckluftzylinder, ein Elektrozylinder oder ein hydraulischer Zylinder wird die Spannvorrichtung 21 zusammen mit der Antriebseinheit 11 derart weit verschoben, bis die gewünschte Spannung in dem Messerelement 5 erreicht ist. Um Längenunterschiede aufgrund von Erwärmungen in dem Messerelement 5 während des Betriebes auszugleichen, kann der Kraftgeber 22 die Spannvorrichtung 21 dauerhaft mit einer Kraft beaufschlagen.

Die Führungsvorrichtung 7 kann eine Drehvorrichtung aufweisen, sodass das Messerelement 5 um eine Achse in Längsrichtung des Messerelementes 5 verdrehbar ist. Auf diese Weise können neben dem Schnitt in horizontaler Richtung auch Schnitte in andere Richtungen, beispielsweise in eine vertikale Richtung, ausgeführt werden.

Die Servomotoren 13 sind vertikal angeordnet, wobei die Exzenterscheiben 15 in einer horizontalen Ebene angeordnet sind. Auf diese Weise wird vermieden, dass es durch die Exzenterscheiben 15 zu schwerkraftbedingten Unwuchten bei einer Umdrehung der Servomotoren 13 kommt. Dadurch ist eine höhere Genauigkeit der durch die Servomotoren 13 erzeugten Rotationsbewegung möglich.

Die Steuerungsvorrichtung 19 kann als eine Master-Slave-Steuerung ausgeführt sein, wobei die Steuerungsvorrichtung 19 eine Ist-Winkelgeschwindigkeit des Servomotors 13 der ersten Antriebseinheit 9 ermittelt und den Servomotor 13 der zweiten Antriebseinheit 11 als Soll-Winkelgeschwindigkeit vorgibt. Selbstverständlich ist es auch möglich, dass die Ist-Winkelgeschwindigkeit des Servomotors 13 der zweiten Antriebseinheit 11 ermittelt wird und dem Servomotor 13 der ersten Antriebseinheit als Soll-Winkelgeschwindigkeit vorgegeben wird.

Dazu kann die CNC-Steuerung dem ersten Regler die Drehzahl vorgeben. Die Ist-Geschwindigkeit des ersten Reglers wird dann als Soll-Geschwindigkeit dem zweiten Regler vorgeben. Auf diese Weise wird die Drehzahlsynchronität auf ganze Umdrehungen bezogen zwischen den beiden Servomotoren in vorteilhafter Weise ermöglicht. Zusätzlich zu den Steuersignalen der Master-Slave-Steuerung sind ferner Vorgaben für das Beschleunigen und das Abbremsen der Servomotoren 13 während einer Umdrehung in den Reglern hinterlegt.

Die Schubstangen 17 der ersten und der zweiten Antriebseinheit 9, 11 können beispielsweise max. 300 mm lang sein. Es hat sich herausgestellt, dass mit einer derartigen Länge der beim Beschleunigen und Abbremsen der Servomotoren 13 während einer Umdrehung notwendige Winkeldifferenz zwischen den Servomotoren gering gehalten werden kann, sodass auch die Belastung für die Servomotoren 13 gering ist.

Mit der erfindungsgemäßen Schneidemaschine 1 kann somit das erfindungsgemäße Verfahren zum Schneiden von Blockmaterialien, insbesondere geschäumten Materialien durchgeführt werden. Dabei wird das Messerelement 5 mit dem ersten und dem zweiten Ende 5a, 5b zum Ausführen einer Hin- und Herbewegung in Längsrichtung translatorisch angetrieben. Das erste und das zweite Ende 5a, 5b des Messerelementes 5 werden dabei angetrieben, wobei der Antrieb des ersten Endes 5a des Messerelementes 5 über die Umwandlung einer ersten Rotationsbewegung in eine erste Translationsbewegung erfolgt und der Antrieb des zweiten Endes 5b des Messerelementes 5 über die Umwandlung einer zweiten Rotationsbewegung in eine zweite, der ersten Translationsbewegung gleichläufige Translationsbewegung erfolgt.

Die Drehzahl der ersten Rotationsbewegung ist, bezogen auf ganze Umdrehungen, gleich der Drehzahl der zweiten Rotationsbewegung. Bei einer Umdrehung der ersten und der zweiten Rotationsbewegung weist die erste Rotationsbewegung in einem ersten und einem zweiten Teilbereich der Umdrehung eine größere Winkelgeschwindigkeit auf als die zweite Rotationsbewegung und in einem dritten und einem vierten Teil der Umdrehung weist die zweite Rotationsbewegung eine größere Winkelgeschwindigkeit auf als die erste Rotationsbewegung. Zu Beginn bzw. am Ende einer Umdrehung und am Übergang zwischen dem zweiten und dritten Teilbereich der Umdrehung weisen die erste und zweite Rotationsbewegung die gleiche Winkelgeschwindigkeit auf.

Dabei wird die erste Rotationsbewegung im ersten und vierten Teilbereich der Umdrehung beschleunigt und im zweien und dritten Teilbereich abgebremst. Die zweite Rotationsbewegung wird im ersten und vierten Teilbereich der Umdrehung abgebremst und im zweiten und dritten Teilbereich beschleunigt.

Die erste Rotationsbewegung wird beispielsweise durch die erste Antriebseinheit 9 und die zweite Rotationsbewegung durch die zweite Antriebseinheit 11 erzeugt.

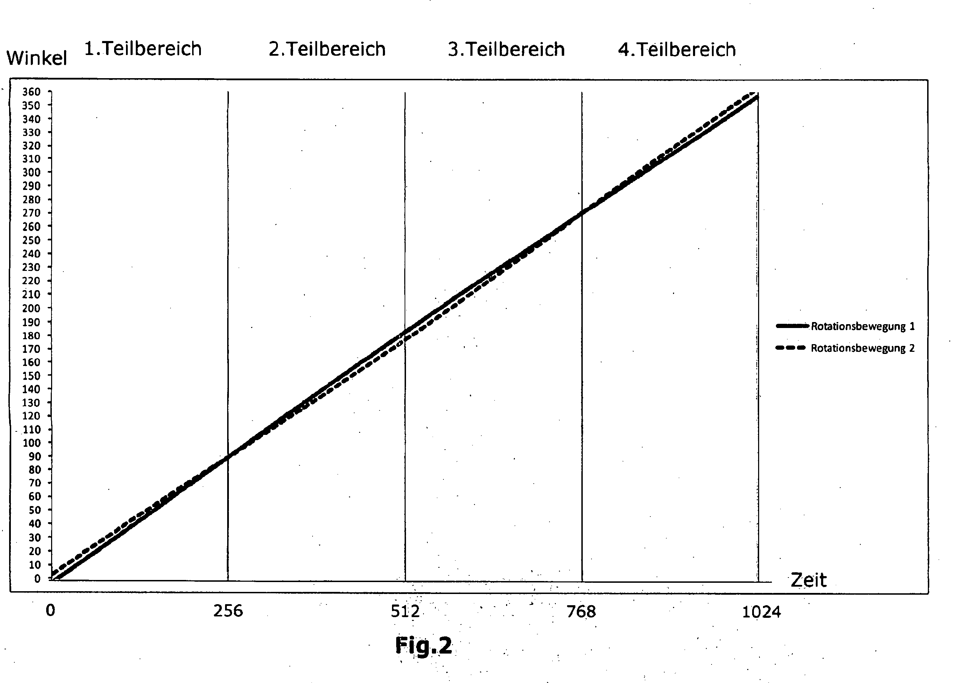

In Fig. 2 ist zur Veranschaulichung die erste und die zweite Rotationsbewegung während einer Umdrehung grafisch dargestellt. Dabei ist der von der jeweiligen Rotationsbewegung zurückgelegte Winkel während einer Umdrehung über eine Zeiteinheit dargestellt. Dazu werden zwei äquivalente Punkte der ersten und zweiten Rotationsbewegung betrachtet. Die Punkte können beispielsweise fiktive Punkte auf den Exzenterscheiben 15 der ersten oder zweiten Antriebseinheit 9, 11 sein.

Wie aus Fig. 2 hervorgeht, weisen zu Beginn der Umdrehung die beiden Punkte bereits einen Winkelversatz auf. Die Rotationsbewegung 1 weist in dem ersten Teilbereich der Umdrehung eine höhere Geschwindigkeit auf als die Rotationsbewegung 2. Dadurch nimmt der Winkelversatz zwischen den beiden Punkten im Verlauf des ersten Teilbereiches der Umdrehung ab. Am Ende des ersten Teilbereiches sind die beiden betrachteten Punkte gleichauf. Aufgrund der höheren Winkelgeschwindigkeit läuft nun die Rotationsbewegung 1 vor der Rotationsbewegung 2 bis zu einer maximalen Winkeldifferenz, die am Ende des zweiten Teilbereiches erreicht ist. Die Rotationsgeschwindigkeit der zweiten Rotationsbewegung nimmt nun zu, sodass die Winkeldifferenz zwischen den beiden Rotationsbewegungen wiederum verringert wird, bis zum Ende des dritten Teilbereiches, an der die beiden betrachteten Punkte gleichauf sind. In dem vierten Teilbereich nimmt die Winkeldifferenz wiederum zu, bis zum Ende des vierten Teilbereiches, an dem die maximale Winkeldifferenz wiederum erreicht ist. Diese maximale Winkeldifferenz ist der neue Ausgangspunkt für die nächste Umdrehung.

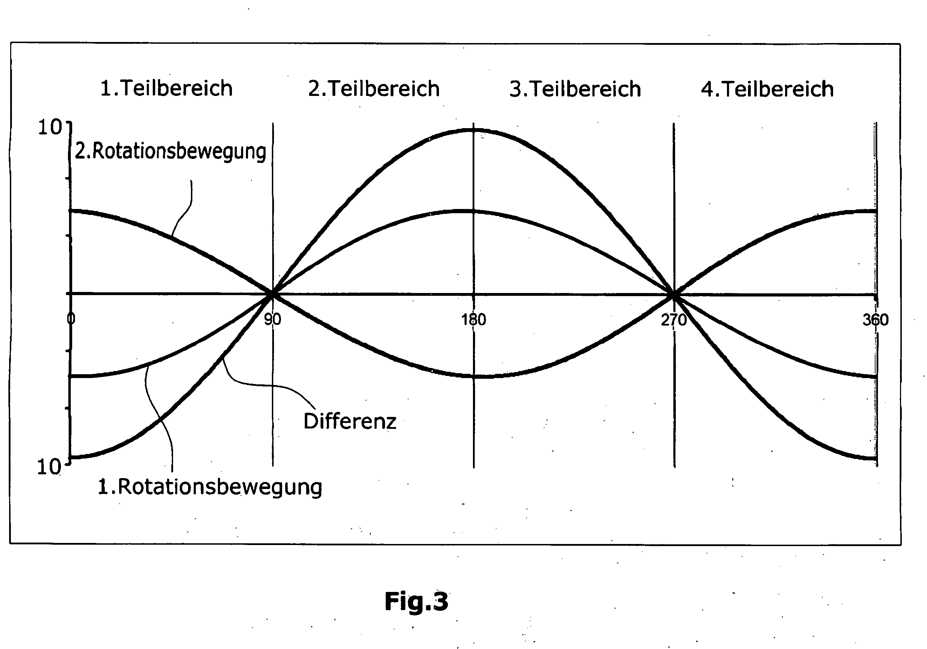

Entsprechend sind in Fig. 3 die Abweichungen der betrachteten Punkte gegenüber einem Mittelwert während einer Umdrehung schematisch dargestellt.

Zu Beginn der Umdrehung weisen die betrachteten Punkte die maximale Winkeldifferenz auf. Zu Beginn der Umdrehung sind die Rotationsgeschwindigkeiten der ersten und zweiten Rotationsbewegung gleich. Die zweite Rotationsbewegung wird abgebremst, während die erste Rotationsbewegung beschleunigt wird. Dies erfolgt im ersten Teilbereich der Umdrehung bis am Ende des ersten Teilbereiches die beiden betrachteten Punkte bei einem Durchschnittswinkel von etwa 90° gleichauf sind. Zu diesem Zeitpunkt hat der Punkt der ersten Rotationsbewegung einen Winkel von mehr als 90° zurückgelegt und der Punkt der zweiten Rotationsbewegung einen Winkel von weniger als 90°.

Der erste bis vierte Teilbereich der Umdrehung kann unterschiedlich groß sein, d. h. der erste Teilbereich muss nicht notwendigerweise nach 90° enden, sondern es kann zu Verschiebungen innerhalb einer Umdrehung kommen.

Am ersten Ende des ersten Teilbereiches der Umdrehung besteht eine relativ große Differenz in der Winkelgeschwindigkeit zwischen der ersten und zweiten Rotationsbewegung, wodurch eine erneute Differenz in dem Winkel zwischen den beiden Rotationsbewegungen entsteht. Die erste Rotationsbewegung wird nun abgebremst während die zweite Rotationsbewegung beschleunigt wird, sodass am Ende des zweiten Teilbereiches oder bei einem durchschnittlichen Winkel von 180° beide Rotationsbewegungen die gleiche Geschwindigkeit aufweisen. Im dritten Teilbereich wird die erste Rotationsbewegung weiter abgebremst während die zweite Rotationsbewegung weiter beschleunigt wird, sodass bei einem durchschnittlich zurückgelegten Winkel von 270° beide betrachteten Punkte gleichauf sind.

Durch die Geschwindigkeitsdifferenz entsteht im vierten Teilbereich wiederum eine Winkelabweichung. Da in diesem die erste Rotationsbewegung wieder beschleunigt wird und die zweite Rotationsbewegung abgebremst wird, erreichen die beiden Rotationsbewegungen am Ende des vierten Teilbereiches und somit am Ende der Umdrehung wiederum die gleiche Geschwindigkeit. Das Ende der Umdrehung bildet den Ausgangspunkt für eine neue Umdrehung.

## Patentansprüche

1. Verfahren zum Scheiden von Blockmaterialien, insbesondere geschäumten oder expandierten Materialien, wobei ein Messerelement (5) mit einem ersten und einem zweiten Ende (5a, 5b) zum Ausführen einer Hin- und Her-Bewegung in Längsrichtung translatorisch angetrieben wird,
wobei das erste und das zweite Ende (5a, 5b) des Messerelementes (5) angetrieben werden,
wobei der Antrieb des ersten Endes (5a) des Messerelementes (5) über die Umwandlung einer ersten Rotationsbewegung in eine erste Translationsbewegung erfolgt und der Antrieb des zweiten Endes (5b) des Messerelementes (5) über die Umwandlung einer zweiten Rotationsbewegung in eine zweite, der ersten Translationsbewegung gleichläufige Translationsbewegung erfolgt,
wobei die Drehzahl der ersten Rotationsbewegung auf ganze Umdrehungen bezogen gleich der Drehzahl der zweiten Rotationsbewegung ist, **dadurch gekennzeichnet,**
**dass** bei einer Umdrehung der ersten und der zweiten Rotationsbewegung die erste Rotationsbewegung in einem ersten und zweiten Teilbereich der Umdrehung eine größere Winkelgeschwindigkeit aufweist als die zweite Rotationsbewegung und in einem dritten und vierten Teilbereich der Umdrehung die zweite Rotationsbewegung eine größere Winkelgeschwindigkeit aufweist als die erste Rotationsbewegung und
**dass** zu Beginn bzw. am Ende einer Umdrehung und am Übergang zwischen dem zweiten und dritten Teilbereich der Umdrehung die erste und die zweite Rotationsbewegung die gleiche Winkelgeschwindigkeit aufweisen.

2. Verfahren nach Anspruch 1 **dadurch gekennzeichnet, dass** die erste Rotationsbewegung im ersten und im vierten Teilbereich der Umdrehung beschleunigt und im zweiten und im dritten Teilbereich abgebremst wird.

3. Verfahren nach Anspruch 1 oder 2 **dadurch gekennzeichnet, dass** die zweite Rotationsbewegung im ersten und im vierten Teilbereich der Umdrehung abgebremst und im zweiten und im dritten Teilbereich beschleunigt wird.

4. Verfahren nach einem der Ansprüche 1 bis 3 **dadurch gekennzeichnet, dass** die erste und die zweite Rotationsbewegung durch einen ersten und einen zweiten Servomotor (13) erzeugt und/oder jeweils über eine Exzenterscheibe (15) mit Schubstange (17) in die erste und die zweite Translationsbewegung umgewandelt werden.

5. Verfahren nach einem der Ansprüche 1 bis 4, **dadurch gekennzeichnet, dass** eine Steuerung der ersten und zweiten Rotationsbewegung über eine Master-Slave-Steuerung erfolgt, wobei eine Ist-Winkelgeschwindigkeit der ersten Rotationsbewegung als Soll-Winkelgeschwindigkeit der zweiten Rotationsbewegung oder eine Ist-Winkelgeschwindigkeit der zweiten Rotationsbewegung als Soll-Winkelgeschwindigkeit der ersten Rotationsbewegung vorgegeben wird.

6. Verfahren nach einem der Ansprüche 1 bis 5, **dadurch gekennzeichnet, dass** die Winkelgeschwindigkeiten der ersten und/oder der zweiten Rotationsbewegung sich während einer Umdrehung periodisch verändert.

7. Verfahren nach einem der Ansprüche 1 bis 6, **dadurch gekennzeichnet, dass** das Messerelement (5) um eine Achse in Längsrichtung des Messerelementes (5) drehbar ist.

8. Verfahren nach einem der Ansprüche 1 bis 7, **dadurch gekennzeichnet, dass** eine während einer Umdrehung auftretende Drehwinkeldifferenz zwischen der ersten und zweiten Rotationsbewegung maximal 10° beträgt.

9. Schneidemaschine (1) zum Schneiden von Blockmateriälien, insbesondere geschäumte oder expandierte Materialien,
mit einem Maschinenrahmen (3),
mit einem Messerelement (5) mit einem ersten und einem zweiten Ende (5a, 5b),
mit einer Führungsvorrichtung (7) zum Führen des Messerelementes (5) in eine Längsrichtung des Messerelementes (5) und
mit einer ersten und einer zweiten Antriebseinheit (9, 11), wobei die erste Antriebeinheit (9) mit, dem ersten Ende (5a) des Messerelementes (5) und die zweite Antriebseinheit (11) mit dem zweiten Ende (5b) des Messerelementes (5) gekoppelt ist,
wobei die erste oder die zweite Antriebseinheit (9, 11) auf einer Spannvorrichtung (21) angeordnet, über die eine Spannung des Messerelementes (5) einstellbar ist,
**dadurch gekennzeichnet, dass**
die erste und die zweite Antriebseinheit (9, 11) jeweils einen Servomotor (13) und eine an den Servomotor (13) gekoppelte Exzenterscheibe (15) mit Schubstange (17) aufweisen und jeweils eine der Schubstangen (17) mit dem ersten und zweiten Ende (5a, 5b) des Messerelementes (5) verbunden ist und
dass eine gemeinsame Steuerungsvorrichtung (19) die Servomotoren (13) der ersten und zweiten Antriebseinheit (9, 11) steuert, wobei die Steuerungsvorrichtung (19) die Servomotoren (13) bezogen auf ganze Umdrehungen drehzahlsynchron antreibt und während einer Umdrehung der Servomotoren (13) mindestens einen der Servomotoren (13) abbremst und wieder beschleunigt, derart, dass der Servomotor (13) der ersten Antriebseinheit (9) in einem ersten und zweiten Teilbereich der Umdrehung eine größere Winkelgeschwindigkeit aufweist als der Servomotor (13) der zweiten Antriebseinheit (11) und in einem dritten und vierten Teilbereich der Umdrehung der Servomotor (13) der zweiten Antriebseinheit eine größere Winkelgeschwindigkeit aufweist als der Servomotor (13) der ersten Antriebseinheit (9).

10. Schneidemaschine nach Anspruch 9, **dadurch gekennzeichnet, dass** die Steuerungsvorrichtung (19) eine Master-Slave-Steuerung ist, wobei die Steuerungsvorrichtung (19) eine Ist-Winkelgeschwindigkeit des Servomotors (13) der ersten Antriebseinheit (9) ermittelt und dem Servomotor (13) der zweiten Antriebseinheit (11) als Soll-Winkelgeschwindigkeit vorgibt oder eine Ist-Winkelgeschwindigkeit des Servomotors (13) der zweiten Antriebseinheit (11) ermittelt und dem Servomotor (13) der ersten Antriebseinheit (9) als Soll-Winkelgeschwindigkeit vorgibt.

11. Schneidemaschine nach Anspruch 9 oder 10, **dadurch gekennzeichnet, dass** die Spannvorrichtung (21) aus einer in Längsrichtung des Messerelementes (5) verfahrbaren Platte besteht, auf der die erste oder zweite Antriebsvorrichtung (9, 11) angeordnet ist.

12. Schneidemaschine nach einem der Ansprüche 9 bis 11, **dadurch gekennzeichnet, dass** über die Führungsvorrichtung (7) das Messerelement (5) um eine Achse in Längsrichtung des Messerelementes (5) verdrehbar ist.

13. Schneidemaschine nach einem der Ansprüche 9 bis 12, **dadurch gekennzeichnet, dass** die Servomotoren (13) vertikal und die Exzenterscheiben (15) in einer horizontalen Ebene angeordnet sind.

14. Schneidemaschine nach einem der Ansprüche 9 bis 13, **dadurch gekennzeichnet, dass** die Schubstangen (17) eine Länge zwischen 150 mm und 300 mm aufweisen.

15. Verfahren zum Betrieb einer Schneidemaschine (1) nach einem der Ansprüche 9 bis 14,
wobei die Servomotoren (13) der ersten und der zweiten Antriebseinheit (9, 11) auf ganze Umdrehungen bezogen mit der gleichen Drehzahl angetrieben werden,
wobei zu Beginn bzw. am Ende einer Umdrehung der Servomotoren (13) der ersten und der zweiten Antriebseinheit (9, 11) die Servomotoren (13) die gleiche Geschwindigkeit haben,
wobei im ersten und im vierten Teilbereich der Umdrehung der Servomotor (13) der ersten Antriebseinheit (9) beschleunigt und/oder der Servomotor (13) der zweiten Antriebseinheit (11) abgebremst wird,
wobei im zweiten und im dritten Teilbereich der Umdrehung der Servomotor (13) der ersten Antriebseinheit (9) abgebremst und/oder der Servomotor (13) der zweiten Antriebseinheit (11) beschleunigt wird,
wobei beim Übergang zwischen dem zweiten und dem dritten Teilbereich der Umdrehung die Servomotoren (13) wieder die gleiche Geschwindigkeit haben.

## Claims

1. A method for the cutting of block materials, particularly foamed or expanded materials, wherein a knife element (5) having first and second ends (5a,5b) is driven in a translatory manner in longitudinal direction for performing a reciprocating movement,
the driving force being exerted on the first and second ends (5a,5b) of the knife element (5),
the driving of the first end (5a) of the knife element (5) being performed by conversion of a first rotary movement into a first translatory movement, and the driving of the second end (5b) of the knife element (5) being performed by conversion of a second rotary movement into a second translatory movement in a sense opposed to that of the first translatory movement,
the rotational frequency of the first rotary movement with respect to full revolutions being equal to the rotational frequency of the second rotary movement, **characterized in**
**that**, per revolution of the first and second rotary movements, the first rotary movement has a higher angular speed in a first and a second partial range of the revolution than the second rotary movement, and in a third and a fourth partial range of the revolution, the second rotary movement has a higher angular speed than the first rotary movement, and
**that**, at the start and respectively the end of a revolution and at the transition between the second and the third partial ranges of the revolution, the first and second rotary movements have an identical angular speed.

2. The method according to claim 1, **characterized in that** the first rotary movement is accelerated in the first and fourth partial ranges of the revolution and is decelerated in the second and third partial ranges.

3. The method according to claim 1 or 2, **characterized in that** the second rotary movement is decelerated in the first and fourth partial ranges of the revolution and is accelerated in the second and third partial ranges.

4. The method according to any one of claims 1 to 3, **characterized in that** the first and second rotary movements are generated by first and second servo motors (13) and/or are each converted into the first and respectively the second translatory movement by means of an eccentric disk (15) with pushrod (17).

5. The method according to any one of claims 1 to 4, **characterized in that** a controlling of the first and second rotary movements is performed via a master/slave control unit, an actual angular speed of the first rotary movement being preset as a desired angular speed of the second rotary movement, or an actual angular speed of the second rotary movement being preset as a desired angular speed of the first rotary movement.

6. The method according to any one of claims 1 to 5, **characterized in that** the angular speeds of the first and/or the second rotary movement periodically vary during a revolution.

7. The method according to any one of claims 1 to 6, **characterized in that** the knife element (5) is rotatable about an axis extending in the longitudinal direction of the knife element (5).

8. The method according to any one of claims 1 to 7, **characterized in that** differences in the angle of rotation between the first and second rotary movements as occurring during a revolution are 10° at maximum.

9. A cutting machine (1) for the cutting of block materials, particularly foamed or expanded materials,
comprising a machine frame (3),
comprising a knife element (5) having first and second ends (5a,5b),
comprising a guide means (7) for guiding the knife element (5) in a longitudinal direction of the knife element (5), and
comprising first and second drive units (9,11), the first drive unit (9) being coupled to the first end (5a) of the knife element (5), and the second drive unit (11) being coupled to the second end (5b) of the knife element (5),
the first or the second drive unit (9,11) being arranged on a tensioning means (21) provided for setting a tension of the knife element (5),
**characterized in that**
the first and second drive units (9,11) each comprise a servo motor (13) and an eccentric disk (15) with pushrod (17), said disk being coupled to the servo motor (13), and a respective one of said pushrods (17) is connected to the first and second ends (5a,5b) of the knife element (5), and
that a common control unit (19) is operative to control the servo motors (13) of the first and second drive units (9,11), said control unit (19) being operative to control the rotational frequency of the servo motors (13) synchronously with respect to full revolutions, and, during a revolution of the servo motors (13), to decelerate and again accelerate at least one of the servo motors (13) in such a manner that, in a first and a second partial range of the revolution, the servo motor (13) of the first drive unit (9) has a larger angular speed than the servo motor (13) of the second drive unit (11) and, in a third and a fourth partial range of the revolution, the servo motor (13) of the second drive unit has a larger angular speed than the servo motor (13) of the first drive unit (9).

10. The cutting machine according to claim 9, **characterized in that** the control unit (19) is a master/slave control, said control unit (19) detecting an actual angular speed of the servo motor (13) of the first drive unit (9) and presetting it as a desired angular speed of the servo motor (13) of the second drive unit (11), or detecting an actual angular speed of the servo motor (13) of the second drive unit (11) and presetting it as a desired angular speed of the servo motor (13) of the first drive unit (9).

11. The cutting machine according to claim 9 or 10, **characterized in that** the tensioning means (21) comprises a plate which is displaceable in the longitudinal direction of the knife element (5), said plate having the first or the second drive means (9,11) arranged on it.

12. The cutting machine according to any one of claims 9 to 11, **characterized in that**, with the aid of the guide means (7), the knife element (5) is rotatable about an axis extending in the longitudinal direction of the knife element (5).

13. The cutting machine according to any one of claims 9 to 12, **characterized in that** the servo motors (13) are arranged vertically and the eccentric disks (15) are arranged in a horizontal plane.

14. The cutting machine according to any one of claims 9 to 13, **characterized in that** the pushrods (17) have length in the range from 150 mm to 300 mm.

15. A method for operating a cutting machine (1) according to any one of claims 9 to 14,
wherein the servo motors (13) of the first and second drive units (9,11) are driven with the same rotational frequency with respect to full revolutions,
wherein, at the start and respectively at the end of a revolution of the servo motors (13) of the first and second drive units (9,11), the servo motors (13) have the same rotational speed,
wherein, in the first and the fourth partial range of the revolution, the servo motor (13) of the first drive unit (9) is accelerated and/or the servo motor (13) of the second drive unit (11) is decelerated,
wherein, in the second and the third partial range of the revolution, the servo motor (13) of the first drive unit (9) is decelerated and/or the servo motor (13) of the second drive unit (11) is accelerated, and
wherein, at the transition between the second and the third partial range of the revolution, the servo motors (13) have the same speed again.

## Revendications

1. Procédé destiné à couper des matériaux en bloc, en particulier des matériaux moussés ou expansés, un élément de mesure (5) comprenant une première et une deuxième extrémité (5a, 5b) étant entraîné en translation en vue d'effectuer un mouvement de va-et-vient dans la direction longitudinale,
la première et la deuxième extrémité (5a, 5b) de l'élément de mesure (5) étant entraînées,
l'entraînement de la première extrémité (5a) de l'élément de mesure (5) ayant lieu par l'intermédiaire de la conversion d'un premier mouvement de rotation en un premier mouvement de translation et l'entraînement de la deuxième extrémité (5b) de l'élément de mesure (5) ayant lieu par l'intermédiaire de la conversion d'un deuxième mouvement de rotation en un deuxième mouvement de translation qui est synchronisé avec le premier mouvement de translation,
la vitesse de rotation du premier mouvement de rotation, mesurée par rapport à des rotations complètes, étant égale à la vitesse de rotation du deuxième mouvement de rotation, **caractérisé en ce**
**que** pour une rotation du premier et du deuxième mouvement de rotation, le premier mouvement de rotation présente dans une première et une deuxième zone partielle de la rotation une vitesse angulaire supérieure à celle du deuxième mouvement de rotation et le deuxième mouvement de rotation présente dans une troisième et une quatrième zone partielle de la rotation une vitesse angulaire supérieure à celle du premier mouvement de rotation et
en ce qu'au début ou à la fin d'une rotation et lors de la transition entre la deuxième et la troisième zone partielle de la rotation, le premier et le deuxième mouvement de rotation présentent la même vitesse angulaire.

2. Procédé selon la revendication 1, **caractérisé en ce que** le premier mouvement de rotation est accéléré dans la première et dans la quatrième zone partielle de la rotation et est freiné dans la deuxième et dans la troisième zone partielle.

3. Procédé selon la revendication 1 ou 2, **caractérisé en ce que** le deuxième mouvement de rotation est freiné dans la première et dans la quatrième zone partielle de la rotation et est accéléré dans la deuxième et dans la troisième zone partielle.

4. Procédé selon l'une des revendications 1 à 3, **caractérisé en ce que** le premier et le deuxième mouvement de rotation sont générés par un premier et un deuxième servomoteur (13) et/ou sont convertis respectivement dans le premier et le deuxième mouvement de translation par l'intermédiaire d'un disque excentrique (15) comprenant une tige de poussée (17).

5. Procédé selon l'une des revendications 1 à 4, **caractérisé en ce qu'**une commande du premier et du deuxième mouvement de rotation a lieu par l'intermédiaire d'une commande de type maître / esclave, une vitesse angulaire effective du premier mouvement de rotation étant prédéfinie comme la vitesse angulaire de consigne du deuxième mouvement de rotation ou une vitesse angulaire effective du deuxième mouvement de rotation étant prédéfinie comme la vitesse angulaire de consigne du premier mouvement de rotation.

6. Procédé selon l'une des revendications 1 à 5, **caractérisé en ce que** les vitesses angulaires du premier et/ou du deuxième mouvement de rotation se modifient de façon périodique pendant une rotation.

7. Procédé selon l'une des revendications 1 à 6, **caractérisé en ce que** l'élément de mesure (5) peut pivoter autour d'un axe dans la direction longitudinale de l'élément de mesure (5).

8. Procédé selon l'une des revendications 1 à 7, **caractérisé en ce qu'**une différence de l'angle de rotation entre le premier et le deuxième mouvement de rotation, se produisant pendant une rotation, s'élève à au plus 10°.

9. Machine de coupe (1) destinée à couper des matériaux en bloc, en particulier des matériaux moussés ou expansés,
comprenant un châssis de machine (3),
comprenant un élément de mesure (5) pourvu d'une première et d'une deuxième extrémité (5a, 5b),
comprenant un dispositif de guidage (7) destiné au guidage de l'élément de mesure (5) dans une direction longitudinale de l'élément de mesure (5) et
comprenant une première et une deuxième unité d'entraînement (9, 11), la première unité d'entraînement (9) étant couplée avec la première extrémité (5a) de l'élément de mesure (5) et la deuxième unité d'entraînement (11) étant couplée avec la deuxième extrémité (5b) de l'élément de mesure (5),
la première ou la deuxième unité d'entraînement (9, 11) étant disposée sur un dispositif de serrage (21), par l'intermédiaire duquel un serrage de l'élément de mesure (5) peut être réglée,
**caractérisée en ce que**
la première et la deuxième unité d'entraînement (9, 11) présentent respectivement un servomoteur (13) et un disque excentrique (15), pourvu d'une tige de poussée (17), couplé au servomoteur (13) et l'une des tiges de poussée (17) est reliée respectivement à la première et la deuxième extrémité (5a, 5b) de l'élément de mesure (5), et
**en ce qu'**un dispositif de commande commun (19) commande les servomoteurs (13) de la première et de la deuxième unité d'entraînement (9, 11), le dispositif de commande (19) entraînant les servomoteurs (13) par une synchronisation de la vitesse de rotation, mesurée par rapport à des rotations complètes, et pendant une rotation des servomoteurs (13), au moins l'un des servomoteurs (13) freine et réaccélère, de telle sorte que le servomoteur (13) de la première unité d'entraînement (9) présente dans une première et une deuxième zone partielle de la rotation une vitesse angulaire supérieure à celle du servomoteur (13) de la deuxième unité d'entraînement (11) et la deuxième unité d'entraînement (11) dans une troisième et une quatrième zone partielle de la rotation du servomoteur (13) présente une vitesse angulaire supérieure à celle du servomoteur (13) de la première unité d'entraînement (9).

10. Machine de coupe selon la revendication 9, **caractérisée en ce que** le dispositif de commande (19) est une commande de type maître / esclave, le dispositif de commande (19) calculant une vitesse angulaire effective du servomoteur (13) de la première unité d'entraînement (9) et prédéterminant cette vitesse pour le servomoteur (13) de la deuxième unité d'entraînement (11) comme la vitesse angulaire de consigne, ou calculant une vitesse angulaire effective du servomoteur (13) de la deuxième unité d'entraînement (11) et prédéterminant cette vitesse pour le servomoteur (13) de la première unité d'entraînement (9) comme la vitesse angulaire de consigne.

11. Machine de coupe selon la revendication 9 ou 10, **caractérisée en ce que** le dispositif de serrage (21) est composé d'une plaque pouvant être déplacée dans la direction longitudinale de l'élément de mesure (5), et sur laquelle est disposé le premier ou le deuxième dispositif d'entraînement (9, 11).

12. Machine de coupe selon l'une des revendications 9 à 11, **caractérisée en ce que** l'élément de mesure (5) peut être pivoté autour d'un axe dans la direction longitudinale de l'élément de mesure (5), par l'intermédiaire du dispositif de guidage (7).

13. Machine de coupe selon l'une des revendications 9 à 12, **caractérisée en ce que** les servomoteurs (13) sont disposés à la verticale et les disques excentriques (15) sont disposés dans un plan horizontal.

14. Machine de coupe selon l'une des revendications 9 à 13, **caractérisée en ce que** les tiges de poussée (17) présentent une longueur comprise entre 150 mm et 300 mm.

15. Procédé destiné au fonctionnement d'une machine de coupe (1) selon l'une des revendications 9 à 14,
les servomoteurs (13) de la première et de la deuxième unité d'entraînement (9, 11) étant entraînés avec la même vitesse de rotation, mesurée par rapport à des rotations complètes,
les servomoteurs (13) ayant la même vitesse au début ou à la fin d'une rotation des servomoteurs (13) de la première et de la deuxième unité d'entraînement (9, 11),
dans la première et dans la quatrième zone partielle de la rotation, le servomoteur (13) de la première unité d'entraînement (9) étant accéléré et/ou le servomoteur (13) de la deuxième unité d'entraînement (11) étant freiné,
dans la deuxième et dans la troisième zone partielle de rotation, le servomoteur (13) de la première unité d'entraînement (9) étant freiné et/ou le servomoteur (13) de la deuxième unité d'entraînement (11) étant accéléré,
les servomoteurs (13) ayant de nouveau la même vitesse lors de la transition entre la deuxième et la troisième zone partielle de la rotation.
